# EUROPEAN PATENT SPECIFICATION

(11) **EP 0 369 171 B1**
(45) Date of publication and mention of the grant of the patent: **23.08.1995**
(21) Application number: 89119091.0
(22) Date of filing: 13.10.1989
(51) Int. Cl.: B01J 20/08, B01J 20/20

(54) **Peptized activated carbon/alumina composite**
Peptisierte aktivierte Kohlenstoff-/Aluminiumoxid-Zusammenstellung
Matériau composite en carbone/alumine peptisé et activé

(30) Priority: 14.10.1988 US 257873; 28.08.1989 US 398942
(43) Date of publication of application: 23.05.1990
(73) Proprietor: ALUMINUM COMPANY OF AMERICA, Pittsburgh Pennsylvania (US)
(72) Inventor: Saforo, Emmanuel K., Pennsylvania (US); Liu, Paul K.T., Pittsburgh 15238 Pennsylvania (US); Bergstrom, Robin K., Natrona Heights 15065 Pennsylvania (US); Gatty, David G., Tarentum 15084 Pennsylvania (US)
(74) Representative: Baillie, Iain Cameron

(56) References cited:
- FR-A- 2 313 967
- GB-A- 295 623
- GB-A- 1 204 353
- US-A- 4 598 060
- US-A- 4 677 086
- US-A- 4 795 735

## Description

This invention relates to adsorbents and more particularly, it relates to a peptized activated carbon/alumina composite and method of preparing the same suitable for use in adsorption.

The use of activated carbon is considered to be one of the most economical methods for treating water for the removal of a wide range of pollutants. Its heterogeneous pore structure is suitable for removing most waste water pollutants although its capacity for an individual pollutant varies.

Activated carbon is used in drinking water treatment for removing organic pollutants including objectionable taste and odor. Although it is able to adsorb some inorganic molecules, e.g., phosphates and chromates, adsorption sites available for these components are quite limited. Because of lack of capacity for inorganic materials, the adsorber service life is shortened although the overall saturation capacity may not be reached for the organic material.

In gas separation and purification, activated alumina has been used very frequently to remove trace molecules such as carbon dioxide and ammonia, because activated alumina has a high adsorption capacity for these materials at low concentration ranges. However, gas waste streams often contain other pollutants, such as non-polar hydrocarbons, e.g., methane, which activated alumina only weakly adsorbs. This requires an additional step for removal of such organic materials. Thus, it will be understood that there is a great need for an adsorption material which would adsorb both kinds of pollutants.

In the prior art, U.S. Patent 4,499,208 discloses activated carbon pellets suitable for use in the adsorbent beds of pressure swing adsorption systems. The carbon pellets are prepared by mixing a volume-based higher heat capacity, inert inorganic material with a partially activated carbon powder prior to pelletizing of the powder. Dense alumina in the form of corundum is used for this purpose. However, the activated carbon in the form of powder is treated by the addition of a binder, such as pitch, bitumen, tar and tar oil, followed by pelletizing of the powder-binder mixture. The resulting doped adsorbent is designed to enhance the operation of adiabatic pressure swing adsorption processes by decreasing the cyclic temperature change in the adsorbent bed during each processing cycle of the process.

U.S. Patent 1,530,392 discloses a process for making compound adsorbent catalysts wherein the active catalytic components are introduced into a charcoal body which generally serves as a carrier but sometimes is capable of functioning as a catalyst as well as a carrier or adsorbing agent. According to the patent, the active catalytic components are metallic and other elementary substances, including aluminum, zinc, cobalt, copper, etc., and oxides and other compounds of these metals.

U.S. Patent2,662,860 discloses a method for making a molded alumina carrier for a catalyst which comprises mixing alumina trihydrate with an aluminum salt of a strong acid, e.g., AlCl₃, and water; and extruding the mixture into pellets which are then dried and heated to a temperature above 200°C.

U.S. Patent 3,135,696 discloses a process for the preparation of aluminum oxide and carbon based briquettes for reducing the aluminum oxide with carbon.

U.S. Patent 3,158,578 teaches a method for preparing an activated alumina which is useful in bleaching refined cottonseed oil which comprises treating activated alumina with an aqueous solution of sulfurous acid until the alumina is saturated and then drying the treated alumina.

U.S. Patent 3,658,724 discloses an adsorbent oxidation catalyst comprised of an adsorbent which can be a non-combustible refractory of high surface area, such as silica, alumina or activated carbon, mixed with such refractory. However, the adsorbent has an oxidation catalyst incorporated therein or on its outer surfaces.

U.S. Patent 3,842,014 discloses graphite-alumina pellets consisting essentially of a gas or vacuum ground graphite of surface area 50 to 2000 square meters per gram, and, as a binder, alumina of pseudoboehmite structure of crystalline size less than 10 nanometers and of surface area 200 to 600 square meters per gram.

U.S. Patents 3,941,719 and 3,944,658 (both divisions of Serial No. 281,434) describes a method of making a transparent activated nonparticulate alumina by hydrolyzing aluminum alkoxides, treating the hydrolyzed slurry with an acid or a salt to peptize it, heat treating the peptized aqueous slurry above 80°C until a clear solution is formed, forming a gel either by further heating of the solution or by treating it in an organic base such as urea, and then pyrolyzing the gel at a temperature of 500 to 1200°C to remove water and residual carbon.

U.S. Patent 4,113,661 discloses a method for making a porous catalyst carrier by treating alpha-alumina monohydrate with a monobasic acid such as nitric acid and then neutralizing the acid with a base such as an aqueous ammonia. The resulting material is fed to an extruder, and the extrudate is then dried and calcined.

U.S. Patent 4,140,773 describes a method for making alumina spheres by hydrolyzing aluminum alkoxides and then drying the hydrolyzed alumina to a powder which is then dropped onto a rotating wheel under a peptizing spray, such as nitric acid, acetic acid, formic acid, etc., which is misted onto the wheel, resulting in the formation of spheroidal alumina.

U.S. Patent 4,277,376 describes the formation of a monolithic catalyst support by mixing colloidal gamma alumina, alpha alumina and ceramic fibers with fluidizing and binding agents, water and mineral acid in an amount sufficient to convert the alpha alumina into a gel. The mass is then formed into a body of the desired shape which is dried to substantially remove the added water and then heat treated at 800 to 1000°C.

U.S. Patent 4,705,767 teaches the addition of surface active agents to an acid-peptized alumina. The alumina is peptized with nitric acid, acid nitrates such as aluminum nitrate, acetic acid or formic acid. The acid peptized paste may be subsequently neutralized with ammonium hydroxide. The acid peptized paste is then mixed with a cationic, anionic or nonionic surfactant prior to extrusion.

U.S. Patent 4,058,483 discloses an adsorptive material, useful for removing substances from gases and liquids, in discrete pieces, each comprising an adsorptive carbon and an inorganic adsorptive oxide in a mutual weight proportion between 1:5 and 5:1 and the discrete pieces having been formed by a wet method.

Japanese Patent 60,087,853 discloses a heat resistant adsorbent for hydrocarbon content of exhaust gas which consists of granular-activated charcoal, the surface of which is coated with porous alumina. The adsorbent is made from a slurry of boehmite alumina, water and nitric acid to which is added powdered gamma alumina. Thereafter, 2 to 5 mm granular activated charcoal is coated by immersion in the slurry mixture.

The present invention provides an improved adsorbent comprised of activated carbon/alumina formed by peptizing a mixture of alumina and activated carbon.

In accordance with the present invention, there is provided a process of preparing an activated carbon/alumina cementitious composite having carbon powder particles uniformly dispersed therethrough and having a crush strength of at least 4.5 kg (10 lbs.) for a 3mm (1/8 inch) diameter extrudate, comprising the steps of:
(a) providing a blend containing alumina hydrate powder and activated carbon powder having an average particle size in the range of 0.5 to 500 »m;
(b) adding to said blend a peptizing agent and water to form a mixture, the carbon powder being dispersed in the mixture, the mixture comprising, in percent by weight of the total mixture, 5 to 90% alumina hydrate, 5 to 90% activated carbon, 2 to 30% peptizing agent and water, the amount of said peptizing agent being sufficient to give to said composite said crush strength;
(c) forming a green body from said mixture; and
(d) heating the green body to form the activated carbon/alumina cementitious composite.

Also provided in accordance with the present invention is a calcined activated carbon/alumina cementitious composite suitable for use as a sorbent at about ambient temperature, the cementitious composite having activated carbon uniformly dispersed therein and having a crush strength of at least 4.5 kg (10 lbs.) for a 3mm (1/8 inch) diameter extrudate, the composite resulting from a mixture of activated carbon powder having a particle size in the range of 0.5 to 500 »m, (a) boehmite alumina hydrate powder or (b) alumina hydrate powder having a particle size in the range of 0.02 to 200 »m, a peptizing agent and water, the mixture comprising, in percent by weight of the total mixture, 5 to 90% alumina hydrate, 5 to 90% activated carbon, 2 to 30% of peptizing agent and water, the amount of said peptizing agent being sufficient to give to said composite said crush strength;
said mixture formed into a green body and heated for a time sufficient to increase the strength thereof and form said calcined activated carbon/alumina cementitious composite.

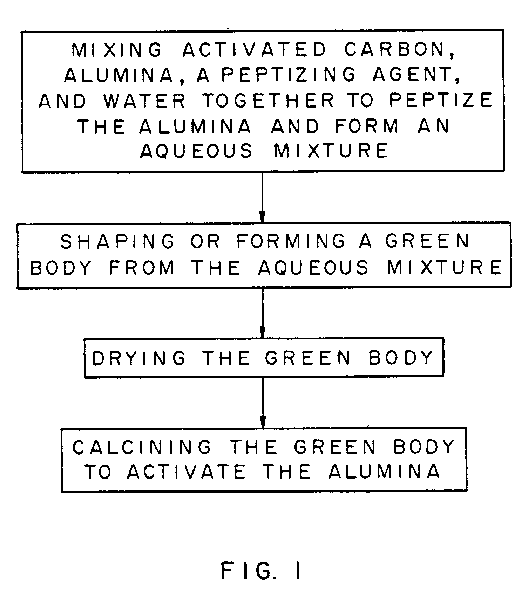

Figure 1 is a flow sheet illustrating the process of the invention.

Figure 2 is a diagrammatic depiction of the apparatus used in carrying out the process of the invention.

The composite formed in accordance with the invention may be initially prepared by first blending together alumina powder, peptizing agent, water and activated carbon powder to provide a homogeneous mixture thereof. Alumina, such as gamma alumina, is not desirable since it only serves to weaken the alumina bonding in the matrix.

Activated carbon, as used herein, can include carbonaceous material, such as lampblack, charcoal, sugar charcoal, carbon produced from oil products and the like, which remain after heating or partial burning and undergoes activation when carbon is treated with steam, for example. Other activation processes known in the art may also be used. For use in the present invention, the activated carbon powder can have a particle size in the range of 0.5 to 500 »m, preferably 1 to 300 »m. The subject composite is much less sensitive to pore volume with respect to the activated carbon phase and thus provides one of the advantages over the use of either constituent alone That is, activated alumina as a binder does not result in a loss of pore volume in activated carbon. By comparison, the use of an organic binder for activated carbon results in the loss of pore volume. The pore volume of the activated carbon can be as low as 0.1 cc/gm, for example, with the higher levels of pore volume, for example, 5.0 cc/gm or higher, but preferably less than 2.5 cc/gm, not presently known to be detrimental.

Alumina useful in the present invention may comprise any hydrated alumina, e.g., alumina trihydrate, preferably boehmite (the use of boehmite herein includes pseudo-boehmite), having a particle size as high as 200 »m but average particle size should be in the range of 0.1 to 100 »m, preferably 1.0 to 50 »m, and typically 1 to 10 »m, e.g., about 5 »m. As used herein, the expression "alumina hydrate" refers to Al₂O₃·xH₂O where x varies from 1 to 3. The water of the alumina hydrate varies from 15.0 to 34.6 percent by weight of the alumina hydrate, determined by calcination at 538°C (1000°F) for one hour. Rehydration bondable alumina such as described in U.S. Patent 4,579,839, may be used in the initial mixture in addition to the peptized alumina, particularly where it is desired to have low levels of alumina and additional bonding or crush strength. However, since it is necessary for the alumina to be in hydrated form prior to peptizing, the use of activated alumina as a starting ingredient would not be economically expedient.

The peptizing agent conveniently may comprise nitric acid. However, other known peptizing agents may be used including, but not limited to, phosphoric acid, hydrochloric acid, formic acid, acetic acid and acid salts such as aluminum nitrate.

The amount or ratio of the ingredients in the initial blend, based on total weight of activated carbon, alumina, peptizing agent and water, may range from 5 to 90 wt.%, preferably 40 to 85 wt.%, activated carbon; 5 to 90 wt.%, preferably 5 to 50 wt.%, and suitably 5 to 20 wt.% alumina; 2 to 30 wt.%, preferably 15 to 25 wt.%, peptizing agent; balance water, typically in the range of 10 to 50 wt.% water. A typical blend would be about 70 to 85 wt.% activated carbon, 5 to 30 wt.% alumina, 20 to 30 wt.% peptizing agent (in the form of 19 wt.% nitric acid), and 30 to 40 wt.% water.

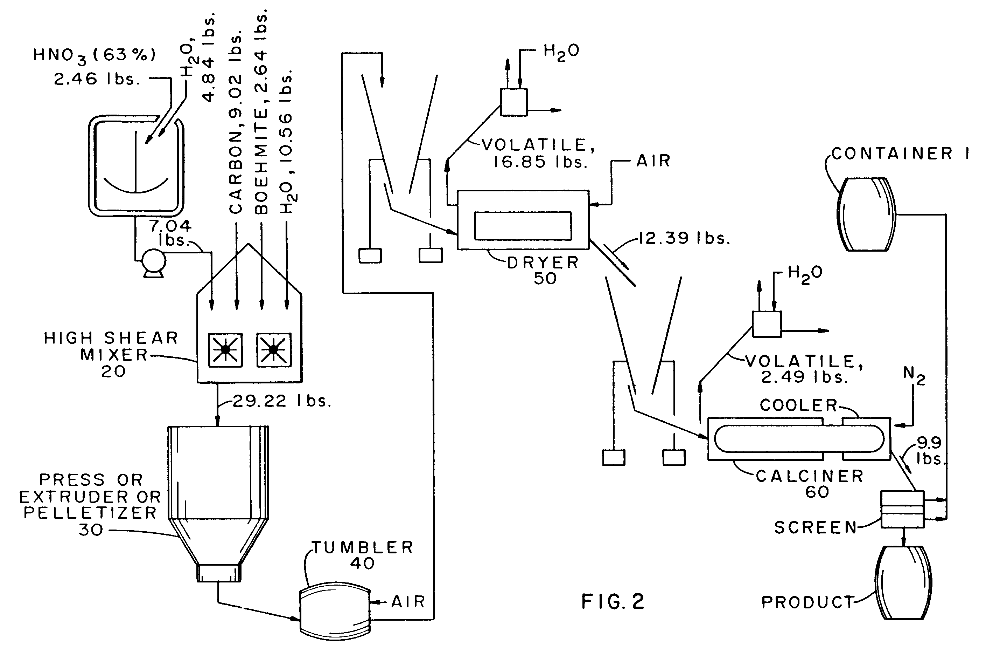

This blend is thoroughly mixed in a mixer such as a high shear mixer as shown at 20 in Figure 2, for a period of from at least about 10 to about 100 minutes to blend the materials together and to ensure that the carbon powder is thoroughly dispersed throughout the mixture. The mixing time also allows the peptizing agent to react with the alumina.

After the blending and peptizing step, the mix is then subjected to a shaping or forming process, for example, using an extruder such as shown at 30 in Figure 2, wherein the material may be extruded using about 49989 to 99978 kPa (7250 to 14500 psi) pressure to provide a green body. That is, after forming as by extruding into strands, the green body has sufficient dimensional stability for handling purposes.

The green body may then be air dried, for example, in tumbler 40, as shown in Figure 2, at room temperature while flowing a stream of air through the tumbler. The green body may then be further air dried at an elevated temperature of from about 60 to 150°C, preferably about 90 to 120°C, and most preferably about 90°C, in a dryer such as, for example dryer 50 in Figure 2, for a period of from about 1 to 4 hours, preferably at least about 2 hours, to remove all moisture from the green body.

Finally, the now-dried green body is calcined, as shown at 60 in Figure 2, in a nonreactive or inert atmosphere, such as nitrogen or argon, at a temperature of from at least 425 up to 650°C for a period of from at least about 20 minutes, preferably 30 minutes, up to about 45 minutes at the calcination temperature. To avoid damage to the composite as it is heated to calcination temperature, the temperature is preferably raised slowly at a rate of not more than about 2°C per minute up to about 250°C, and not more than 3°C per minute from 250°C up to the calcination temperature. The calcined composite is then allowed to cool while maintaining the inert or nonreactive atmosphere at least until the composite has cooled to a temperature of about 110°C.

The result is a cementitious composite containing both activated alumina and activated carbon. That is, these activated adsorbents are bound together in the alumina matrix wherein the carbon particles are uniformly dispersed throughout.

In the present invention, it is important that the carbon surface be wettable by the peptizing agent/water aqueous solution. Thus, a dispersant may be used to enhance the wettability of the carbon surface. A suitable dispersant is Nopcosperse 44, available from Diamond Shamrock, or Darvan 821, available from R.T. Vanderbilt. The addition of such dispersant promotes wettability of the carbon surface by the aqueous solution which results in a homogeneous mix with carbon powder particles uniformly dispersed therein and suitable for forming. The amount of dispersant added is in the range of 0.05 to 0.5 wt.% based on the weight of solids present. A preferred amount of dispersant is in the range of 0.07 to 0.3 wt.%.

While it may not be necessary to the use of the activated carbon/alumina composite as a sorbent, e.g., adsorbent or absorbent, e .g., desiccant; dopants, such as zeolites, resins, binders and fillers may be used with or without water to change the properties of the composite.

Composites fabricated in accordance with the present invention have the advantage that small, weakly adsorbable (primarily polar) components can be adsorbed well by activated alumina contained in the composite, particularly in the low concentration range. The competition effect by molecules strongly adsorbable by activated carbon is minimized or no longer exists, while competition from other alumina adsorbable components is present only to a lesser extent. In addition, the composite total adsorption capacity for organic pollutants in water is reduced because of the use of activated alumina; however, its breakthrough capacity is comparable to activated carbons alone. The composite of the present invention has the advantage that it has a low regeneration cost which allows more frequent regeneration. Also, in the composite, activated carbon responsibilities are limited to the removal of non-polar or large molecules: consequently, it is not necessary to have a large capacity of micropore volume for the removal of weakly adsorbable polar components. This permits a low temperature, e.g., less than 500°C, regeneration of the activated carbon/alumina composite inside the adsorber. Thus, there is no oxidation loss during thermal regeneration.

The activated carbon/alumina composite formed in accordance with the invention may be fabricated by means of extrusion, agglomeration or pelletization. Due to the peptizing of the alumina, the alumina serves as a binder as well as an adsorbent. Additional binders may be added, if necessary, to reinforce particle strength for the composite containing a low ratio of alumina.

To further illustrate the invention, samples of the peptized alumina/activated carbon composite were prepared by first mixing together 2.20 kg (4.84 lbs) of H₂O with 1.12 kg (2.46 lbs) of concentrated (63 wt.%) nitric acid to form a 19.3 wt.% nitric acid mixture. Then into a high shear mixer was added 4.09 kg (9.02 lbs) of CECA activated carbon having an average particle size of 15 »m, 1.20 kg (2.64 lbs) of Condea Pural SB (alumina trihydrate boehmite) having an average particle size of 50 »m, 3.19 kg (7.04 lbs) of the 19 wt.% nitric acid solution and 4.79 kg (10.56 lbs) of water. The blend was mixed together for 45 minutes.

The resulting product was then extruded as pellets at a pressure of about 138 to 27580 kPa (20 to 4000 psi). The pellets were air dried at room temperature in a tumbler for 10 minutes while blowing sufficient air through the tumbler to prevent the pellets from sticking to one another. The pellets were then air dried in a dryer at a bed depth of about 5-7.6 cm (2-3 inches) at a temperature of from 25 to 60°C for about 120 minutes while moving through a first zone and then moved to a second zone where they were dried for 120 minutes at a temperature of from 60 to 110°C until the moisture content was about 15 to 20 wt.%.

The dried product was then calcined under a nitrogen blanket in a 7.6 to 12.7 cm (3 to 5 inch) bed depth in a calciner while ramping the temperature up to 550°C over a period of about 45 minutes. The product was maintained at 550°C over a period of about 45 minutes. The product was maintained at 550°C for 30 to 120 minutes and then cooled to 110°C while maintaining the nitrogen atmosphere.

To further test the effect of moisture content, acid level, particle size and calcination on crush strength, samples or activated carbon/alumina adsorbent were prepared having moisture content ranging from 55 to 66 wt.%, particle sizes ranging from 4 to 15 microns, and using, respectively, two acid levels, identified in the table below as H or L. Crush strength referred to is determined in accordance with ASTM test procedure D-3313, and is measured in kg (pounds) for 3 mm (1/8 inch) diameter extrudate. The carbon to alumina weight ratios of all the samples were 80 wt.% carbon per 20 wt.% alumina. The results are tabulated below.

**Table I**

| Sample Number | Solids Content (Al₂O₃ and C) wt.% of total | HNO₃ Acid (level) Conc | Carbon Particle Size »m | Calc. Temp.°C | Crush Strength for 3 mm (1/8 inch) Extrudate* | |
|---|---|---|---|---|---|---|
| | | | | | (lbs) | (kg) |
| 1 | 37 | (H) | 10 | 425 | 25.7 | 11.3 |
| 2 | 35 | (H) | 4 | 425 | 34.8 | 15.8 |
| 3 | 34 | (L) | 4 | 425 | 4 | 1.8 |
| 4 | 37 | (H) | 10 | 550 | 34 | 15.4 |
| 5 | 35 | (H) | 4 | 550 | 37.5 | 17.0 |
| 6 | 34 | (L) | 4 | 550 | 2 | 0.9 |
| 7 | 43 | (H) | 15 | 425 | 7.6 | 3.5 |
| 8 | 45 | (H) | 15 | 425 | 16.8 | 7.6 |
| 9 | 45 | (H) | 15 | 550 | 25.3 | 11.5 |

| | | | | | | |
|---|---|---|---|---|---|---|
| *Measured by ASTM Procedure D-3313 | | | | | | |

The results show, with the exception of sample 7, that the use of the higher levels of nitric acid peptizing agent results in a higher crush strength for the adsorbent.

Activated carbon has the capacity to adsorb up to about 0.94 wt.% phenol from a solution containing 1.0 x 10⁻⁴ moles/l of phenol at a pH of 4 and at the same time has very little capacity for inorganic compounds, such as potassium dichromate. Activated alumina, on the other hand, does not adsorb phenol contained in this solution. However, activated alumina has about 1 wt.% capacity for adsorbing potassium chromate at a pH of 4. Thus, it will be seen that the activated carbon/alumina composite of the invention would have the ability to remove both phenol and potassium dichromate from waste streams. The capacity for each component should be proportional to the percent of the activated material in the composite.

Similarly, in the gas phase streams, activated alumina has high capacity for adsorption of CO₂, for example, and activated carbon does not at low concentrations of CO₂. Activated carbon, however, has high adsorption capacity for organic materials, e.g., methane. Thus, it will be appreciated that a composite in accordance with the present invention has the capacity to remove both types of material where the individual components do not.

It will be appreciated that it is the blend, or mix of activated carbon and peptized alumina with the carbon powder particles uniformly dispersed throughout, that is so important in the present invention. That is, by having the carbon particles dispersed in alumina, the resulting green body can be calcined to provide a body having a very high crush strength and yet performs excellently as an adsorbent or desiccant. Further, alumina matrix provides the structure for holding the particles of activated carbon powder in place as well as selectively adsorbing certain constituents. Thus, alumina is not so functional in the present invention as to provide abrasion resistance or heat protection for the carbon. The composite is not desirable for high temperature application such as in automotive exhaust fumes because the carbon is not protected. Rather, the composite is most useful at room temperature or warm streams which do not degrade the activated carbon.

## Claims

1. A process of preparing an activated carbon/alumina cementitious composite having carbon powder particles uniformly dispersed therethrough and having a crush strength of at least 4.5 kg (10 lbs.) for a 3mm (1/8 inch) diameter extrudate, comprising the steps of:
(a) providing a blend containing alumina hydrate powder and activated carbon powder having an average particle size in the range of 0.5 to 500 »m;
(b) adding to said blend a peptizing agent and water to form a mixture, the carbon powder being dispersed in the mixture, the mixture comprising, in percent by weight of the total mixture, 5 to 90% alumina hydrate, 5 to 90% activated carbon, 2 to 30% peptizing agent and water, the amount of said peptizing agent being sufficient to give to acid composite said crush strength;
(c) forming a green body from said mixture; and
(d) heating the green body to form the activated carbon/alumina cementitious composite.

2. A process according to claim 1, wherein said mixture is formed by the steps of:
(a) providing peptized alumina having an average particle size in the range of 0.02 to 200 »m;
(b) blending said peptized alumina with activated carbon powder and water to form said mixture, the carbon powder having an average particle size in the range of 0.5 to 500 »m;

3. A process according to claim 1 or 2, wherein the mixture has one or more of the following properties:
(a) the activated carbon has an average particle size in the range of 1 to 300 »m;
(b) the activated carbon has a pore volume of at least 0.1 ml/gm;
(c) the activated carbon has a pore volume of up to 5.0 ml/gm;
(d) the activated carbon has a pore volume of up to 2.5 ml/gm;

4. A process according to claim 1 or 2, wherein the mixture has one of the following properties:
(a) the alumina has an overage particle size in the range of 0.1 to 200 »m;
(b) the alumina has an average particle size in the range of 0.02 to 100 »m;
(c) the alumina has an average particle size in the range of 0.1 to 100 »m;
(d) the alumina has an average particle size in the range of 0.02 to 75 »m;
(e) the alumina has an average particle size in the range of 0.02 to 50 »m;
(f) the alumina has an average particle size in the range of 0.02 to 20 »m;
(g) the alumina has an average particle size in the range of 0.1 to 50 »m; and
(h) the alumina has an average particle size in the range of 0.1 to 10 »m.

5. A process according to claim 1 or 2, wherein:
(a) said mixture contains alumina in the range of 5 to 50 wt.%; or
(b) the mixture contains alumina in the range of 5 to 20 wt.%.

6. A process according to any of the preceding claims, wherein said alumina is boehmite alumina.

7. A process according to any of the preceding claims, wherein the mixture contains activated carbon in the range of 40 to 85 wt.%.

8. A process according to any of the preceding claims, wherein a dispersant is added to enhance the wettability of the carbon powder in the aqueous mixture, a suitable amount of dispersant being in the range of 0.05 to 0.5 wt.%.

9. A process according to any one of claims 1 to 8, wherein said heating step comprises the steps of drying and calcining said green body.

10. A process according to claim 9, wherein said heating step comprises one of the following:
(a) it includes drying said green body at a temperature in the range of 40 to 400°C. for a period of about 1 to 4 hours;
(b) it includes drying said green body at a temperature in the range of 60 to 150°C. for a period of about 1 to 4 hours;
(c) after said drying step, the green body is calcined under a nonreactive atmosphere at a temperature of about 400 to 800°C. for at least 10 minutes;
(d) after said drying step, the green body is calcined under a nonreactive atmosphere at a temperature of about 425 to 650°C. for at least 10 minutes;
(e) said heating step further comprises the steps of drying said green body at a temperature of from about 90 to about 120°C. for a period of from about 2 to about 4 hours, and then calcining said dried green body under an inert or nonreactive atmosphere at a temperature of from about 425 to about 650°C. for from about 30 to 45 minutes;
(f) said calcination step further comprises raising the temperature up to about 250°C. at a rate not exceeding about 2°C. per minute and then raising the temperature from 250°C. up to the calcination temperature at a rate not exceeding about 3°C. per minute.

11. A calcined activated carbon/alumina cementitious composite suitable for use as a sorbent at about ambient temperature, the cementitious composite having activated carbon uniformly dispersed therein and having a crush strength of at least 4.5 kg (10 lbs.) for a 3mm (1/8 inch) diameter extrudate, the composite resulting from a mixture of activated carbon powder having a particle size in the range of 0.5 to 500 »m, (a) boehmite alumina hydrate powder or (b) alumina hydrate powder having a particle size in the range of 0.02 to 200 »m, a peptizing agent and water, the mixture comprising, in percent by weight of the total mixture, 5 to 90% alumina hydrate, 5 to 90% activated carbon, 2 to 30% of peptizing agent and water, the amount of said peptizing agent being sufficient to give to said composite said crush strength;
said mixture formed into a green body and heated for a time sufficient to increase the strength thereof and form said calcined activated carbon/alumina cementitious composite.

12. A composite according to claim 11, wherein said carbon has one of the following properties:
(a) said activated carbon has a pore volume of at least 0.1 cc/gm;
(b) said activated carbon has a pore volume of up to 5.0 cc/gm;
(c) said activated carbon has a pore volume of up to 2.5 cc/gm.

13. A composite according to claim 11 or 12, wherein said alumina has one of the following properties:
(a) said alumina powder has a particle size in the range of 0.1 to 200 »m;
(b) said alumina powder has a particle size in the range of 0.02 to 100 »m;
(c) said alumina powder has a particle size in the range of 0.02 to 75 »m;
(d) said alumina powder has a particle size in the range of 0.02 to 50 »m;
(e) said alumina powder has a particle size in the range of 0.02 to 10 »m;
(f) said alumina powder has a particle size in the range of 0.1 to 100 »m;
(g) said alumina powder has a particle size in the range of 0.1 to 50 »m; and
(h) said alumina powder has a particle size in the range of 0.1 to 10 »m.

14. A composite according to claim 11, 12 or 13, wherein said composite contains alumina in one of the following ranges:
(a) 5 to 50 wt.% of said composite; and
(b) 5 to 20 wt.% of said composite.

15. A composite according to any one of claims 11 to 14, wherein the activated carbon is in the range of 40 to 85 wt.%.

16. A calcined activated carbon/alumina cementitious composite according to claim 11, said mixture comprising activated carbon powder having a particle size in the range of 0.5 to 300 »m and (a) peptized boehmite alumina having a particle size less than 50 »m or (b) peptized alumina having an average particle size in the range of 0.02 to 50 »m.

## Patentansprüche

1. Verfahren zur Herstellung einer kittartigen Aktiv-Kohlenstoff-/Aluminiumoxidzusammensetzung, in der Kohlenstoffpulverteilchen gleichmäßig verteilt sind, wobei die Zusammensetzung bei einem Extrudat mit einem Durchmesser von 3 mm (1/8 Inch) eine Bruchfestigkeit von mindestens 4,5 kg (10 Pfund) aufweist, wobei das Verfahren die folgenden Schritte umfaßt:
(a) Bereitstellung einer Mischung aus Aluminiumoxidhydratpulver und Aktiv-Kohlenstoffpulver mit einer durchschnittlichen Teilchengröße im Bereich von 0,5 bis 500 »m;
(b) Hinzufügen eines Peptisierungsmittels und von Wasser zu der Mischung, so daß sich ein Gemisch ergibt, wobei das Kohlenstoffpulver in dem Gemisch verteilt wird, wobei das Gemisch in Gewichtsprozent des gesamten Gemischs folgendes umfaßt: 5 bis 90% Aluminiumoxidhydrat; 5 bis 90% Aktiv-Kohlenstoff; 2 bis 30% Peptisierungsmittel und Wasser, wobei die Menge des Peptisierungsmittels ausreicht, um der Zusammensetzung die genannte Bruchfestigkeit zu verleihen;
(c) Gestaltung einer grünfesten Substanz aus dem Gemisch; und
(d) Erwärmung der grünfesten Substanz zur Gestaltung der kittartigen Aktiv-Kohlenstoff-/Aluminiumoxidzusammensetzung.

2. Verfahren nach Anspruch 1, wobei das Gemisch durch die folgenden Schritte hergestellt wird:
(a) Bereitstellung peptisierten Aluminiumoxids mit einer durchschnittlichen Teilchengröße im Bereich von 0,02 bis 200 »m;
(b) Mischen des peptisierten Aluminiumoxids mit dem Aktiv-Kohlenstoffpulver und dem Wasser, so daß das Gemisch erzeugt wird, wobei das Kohlenstoffpulver eine durchschnittliche Teilchengröße im Bereich von 0,5 bis 500 »m aufweist.

3. Verfahren nach Anspruch 1 oder 2, wobei das Gemisch eine bzw. mehrere der folgenden Eigenschaften aufweist:
(a) der Aktiv-Kohlenstoff weist eine durchschnittliche Teilchengröße im Bereich von 1 bis 300 »m auf;
(b) der Aktiv-Kohlenstoff weist ein Porenvolumen von mindestens 0,1 ml/gm auf;
(c) der Aktiv-Kohlenstoff weist ein Porenvolumen von bis zu 5,0 ml/gm auf;
(d) der Aktiv-Kohlenstoff weist ein Porenvolumen von bis zu 2,5 ml/gm auf.

4. Verfahren nach Anspruch 1 oder 2, wobei das Gemisch eine der folgenden Eigenschaften aufweist:
(a) das Aluminiumoxid weist eine durchschnittliche Teilchengröße im Bereich von 0,1 bis 200 »m auf;
(b) das Aluminiumoxid weist eine durchschnittliche Teilchengröße im Bereich von 0,02 bis 100 »m auf;
(c) das Aluminiumoxid weist eine durchschnittliche Teilchengröße im Bereich von 0,1 bis 100 »m auf;
(d) das Aluminiumoxid weist eine durchschnittliche Teilchengröße im Bereich von 0,02 bis 75 »m auf;
(e) das Aluminiumoxid weist eine durchschnittliche Teilchengröße im Bereich von 0,02 bis 50 »m auf;
(f) das Aluminiumoxid weist eine durchschnittliche Teilchengröße im Bereich von 0,02 bis 20 »m auf;
(g) das Aluminiumoxid weist eine durchschnittliche Teilchengröße im Bereich von 0,1 bis 50 »m auf; und
(h) das Aluminiumoxid weist eine durchschnittliche Teilchengröße im Bereich von 0,1 bis 10 »m auf.

5. Verfahren nach Anspruch 1 oder 2, wobei:
(a) das Gemisch 5 bis 50 Gewichtsprozent Aluminiumoxid aufweist; oder wobei
(b) das Gemisch 5 bis 20 Gewichtsprozent Aluminiumoxid aufweist.

6. Verfahren nach einem der vorstehenden Ansprüche, wobei es sich bei dem Aluminiumoxid um Böhmit-Aluminiumoxid handelt.

7. Verfahren nach einem der vorstehenden Ansprüche, wobei das Gemisch 40 bis 85 Gewichtsprozent Aktiv-Kohlenstoff aufweist.

8. Verfahren nach einem der vorstehenden Ansprüche, wobei ein Dispersionsmittel hinzugefügt wird, um die Benetzbarkeit des Kohlenstoffpulvers in dem wäßrigen Gemisch zu verbessern, wobei ein geeigneter Anteil des Dispersionsmittels zwischen 0,05 bis 0,5 Gewichtsprozent liegt.

9. Verfahren nach einem der Ansprüche 1 bis 8, wobei der Erwärmungsschritt die Schritte des Trocknens und des Kalzinierens der grünfesten Substanz umfaßt.

10. Verfahren nach Anspruch 9, wobei der Erwärmungsschritt eines der folgenden Merkmale umfaßt:
(a) Trocknen der grünfesten Substanz bei einer Temperatur zwischen 40 und 400°C über einen Zeitraum von 1 bis 4 Stunden;
(b) Trocknen der grünfesten Substanz bei einer Temperatur zwischen 60 bis 150°C über einen Zeitraum von 1 bis 4 Stunden;
(c) die grünfeste Substanz wird nach dem Trocknungsschritt in einer reaktionsunfähigen Atmosphäre über einen Zeitraum von mindestens 10 Minuten bei einer Temperatur von etwa 400 bis 800°C kalziniert;
(d) die grünfeste Substanz wird nach dem Trocknungsschritt in einer reaktionsunfähigen Atmosphäre über einen Zeitraum von mindestens 10 Minuten bei einer Temperatur von etwa 425 bis 650°C kalziniert;
(e) der Erwärmungsschritt umfaßt ferner die Schritte des Trocknens der grünfesten Substanz über einen Zeitraum von etwa 2 bis etwa 4 Stunden bei einer Temperatur von etwa 90 bis etwa 120°C sowie des Kalzinierens der grünfesten Substanz in einer trägen bzw. reaktionsunfähigen Atmosphäre über einen Zeitraum von etwa 30 bis 45 Minuten bei einer Temperatur von etwa 425 bis etwa 650°C;
(f) der Kalzinierungsschritt umfaßt ferner eine Erhöhung der Temperatur auf bis zu etwa 250°C mit einer geringeren Rate als von 2°C je Minute, und wobei die Temperatur dann mit weniger als 3°C je Minute von 250°C auf die Kalzinierungstemperatur erhöht wird.

11. Kalzinierte, kittartige Aktiv-Kohlenstoff-/Aluminiumoxidzusammensetzung, die zur Verwendung als Sorptionsmittel bei Umgebungstemperatur geeignet ist, wobei Aktiv-Kohlenstoff in der kittartigen Zusammensetzung gleichmäßig verteilt ist, wobei die Zusammensetzung bei einem Extrudat mit einem Durchmesser von 3 mm (1/8 Inch) eine Bruchfestigkeit von mindestens 4,5 kg (10 Pfund) aufweist, wobei sich die Zusammensetzung aus einem Gemisch von Aktiv-Kohlenstoffpulver mit einer durchschnittlichen Teilchengröße im Bereich von 0,5 bis 500 »m mit (a) Böhmit-Aluminiumoxidhydratpulver oder (b) Aluminiumhydratpulver mit einer durchschnittlichen Teilchengröße von 0,02 bis 200 »m, einem Peptisierungsmittel und Wasser ergibt, wobei das Gemisch in Gewichtsprozent des gesamten Gemischs folgendes umfaßt: 5 bis 90 % Aluminiumoxidhydrat, 5 bis 90% Aktiv-Kohlenstoff; 2 bis 30% Peptisierungsmittel und Wasser, wobei der Anteil des Peptisierungsmittels ausreichend ist, um der Zusammensetzung die genannte Bruchfestigkeit zu verleihen.

12. Zusammensetzung nach Anspruch 11, wobei der Kohlenstoff eine der folgenden Eigenschaften aufweist:
(a) der Aktiv-Kohlenstoff weist ein Porenvolumen von mindestens 0,1 ml/gm auf;
(b) der Aktiv-Kohlenstoff weist ein Porenvolumen von bis zu 5,0 ml/gm auf;
(c) der Aktiv-Kohlenstoff weist ein Porenvolumen von bis zu 2,5 ml/gm auf.

13. Zusammensetzung nach Anspruch 11 oder 12, wobei das Aluminiumoxid eine der folgenden Eigenschaften aufweist:
(a) das Aluminiumoxid weist eine durchschnittliche Teilchengröße im Bereich von 0,1 bis 200 »m auf;
(b) das Aluminiumoxid weist eine durchschnittliche Teilchengröße im Bereich von 0,02 bis 100 »m auf;
(c) das Aluminiumoxid weist eine durchschnittliche Teilchengröße im Bereich von 0,1 bis 100 »m auf;
(d) das Aluminiumoxid weist eine durchschnittliche Teilchengröße im Bereich von 0,02 bis 75 »m auf;
(e) das Aluminiumoxid weist eine durchschnittliche Teilchengröße im Bereich von 0,02 bis 50 »m auf;
(f) das Aluminiumoxid weist eine durchschnittliche Teilchengröße im Bereich von 0,02 bis 20 »m auf;
(g) das Aluminiumoxid weist eine durchschnittliche Teilchengröße im Bereich von 0,1 bis 50 »m auf; und
(h) das Aluminiumoxid weist eine durchschnittliche Teilchengröße im Bereich von 0,1 bis 10 »m auf.

14. Zusammensetzung nach Anspruch 11, 12 oder 13, wobei die Zusammensetzung Aluminiumoxid in den folgenden Mengen aufweist:
(a) 5 bis 50 Gewichtsprozent der Zusammensetzung; und
(b) 5 bis 20 Gewichtsprozent der Zusammensetzung.

15. Zusammensetzung nach einem der Ansprüche 11 bis 14, wobei der Aktiv-Kohlenstoff zwischen 40 und 85 Gewichtsprozent ausmacht.

16. Kalzinierte, kittartige Aktiv-Kohlenstoff-/Aluminiumoxidzusammensetzung nach Anspruch 11, wobei das Gemisch Aktiv-Kohlenstoffpulver mit einer Teilchengröße im Bereich von 0,5 bis 300 »m aufweist sowie (a) peptisiertes Böhmit-Aluminiumoxid mit einer Teilchengröße von weniger als 50 »m oder (b) peptisiertes Aluminiumoxid mit einer durchschnittlichen Teilchengröße im Bereich von 0,02 bis 50 »m.

## Revendications

1. Procédé pour préparer un composite aggloméré alumine/charbon actif présentant des particules de poudre de charbon uniformément dispersées à travers celui-ci et présentant une résistance à l'écrasement d'au moins 4,5 kg (10 livres) pour un produit d'extrusion de diamètre 3 mm (1/8 pouce), comprenant les étapes consistant :
(a) à fournir un mélange contenant de la poudre d'hydrate d'alumine et de la poudre de charbon actif présentant une taille moyenne de particules dans l'intervalle de 0,5 à 500 »m ;
(b) à ajouter audit mélange un agent peptisant et de l'eau pour former un mélange, la poudre de charbon étant dispersée dans le mélange, le mélange comprenant, en pour-cent en poids du mélange total, de 5 à 90 % d'hydrate d'alumine, de 5 à 90 % de charbon actif, de 2 à 30 % d'agent peptisant et de l'eau, la quantité dudit agent peptisant étant suffisante pour communiquer audit composite ladite résistance à l'écrasement ;
(c) à former à partir dudit mélange un corps vert ; et
(d) à chauffer le corps vert pour former le composite aggloméré alumine/charbon actif.

2. Procédé selon la revendication 1, dans lequel ledit mélange est formé par les étapes consistant :
(a) à fournir de l'alumine peptisée présentant une taille moyenne de particules dans l'intervalle de 0,02 à 200 »m ;
(b) à mélanger ladite alumine peptisée avec de la poudre de charbon actif et de l'eau pour former ledit mélange, la poudre de charbon présentant une taille moyenne de particules dans l'intervalle de 0,5 à 500 »m.;

3. Procédé selon la revendication 1 ou 2, dans lequel le mélange présente une ou plusieurs des propriétés suivantes :
(a) le charbon actif présente une taille moyenne de particules dans l'intervalle de 1 à 300 »m;
(b) le charbon actif présente un volume de pores d'au moins 0,1 ml/g ;
(c) le charbon actif présente un volume de pores allant jusqu'à 5,0 ml/g ;
(d) le charbon actif présente un volume de pores allant jusqu'à 2,5 ml/g.

4. Procédé selon la revendication 1 ou 2, dans lequel le mélange présente une des propriétés suivantes :
(a) l'alumine présente une taille moyenne de particules dans l'intervalle de 0,1 à 200 »m ;
(b) l'alumine présente une taille moyenne de particules dans l'intervalle de 0,02 à 100 »m ;
(c) l'alumine présente une taille moyenne de particules dans l'intervalle de 0,1 à 100 »m ;
(d) l'alumine présente une taille moyenne de particules dans l'intervalle de 0,02 à 75 »m ;
(e) l'alumine présente une taille moyenne de particules dans l'intervalle de 0,02 à 50 »m ;
(f) l'alumine présente une taille moyenne de particules dans l'intervalle de 0,02 à 20 »m ;
(g) l'alumine présente une taille moyenne de particules dans l'intervalle de 0,1 à 50 »m ; et
(h) l'alumine présente une taille moyenne de particules dans l'intervalle de 0,1 à 10 »m ;

5. Procédé selon la revendication 1 ou 2, dans lequel :
(a) ledit mélange contient de l'alumine dans l'intervalle de 5 à 50 % en poids ; ou
(b) le mélange contient de l'alumine dans l'intervalle de 5 à 20 % en poids.

6. Procédé selon l'une quelconque des revendications précédentes, dans lequel ladite alumine est l'alumine de structure boéhmite.

7. Procédé selon l'une quelconque des revendications précédentes, dans lequel le mélange contient du charbon actif dans l'intervalle de 40 à 85 % en poids.

8. Procédé selon l'une quelconque des revendications précédentes, dans lequel on ajoute un dispersant pour augmenter la mouillabilité de la poudre de charbon dans le mélange aqueux, une quantité appropriée de dispersant étant dans l'intervalle de 0,05 à 0,5 % en poids.

9. Procédé selon l'une quelconque des revendications 1 à 8, dans lequel ladite étape de chauffage comprend les étapes consistant à sécher et à calciner ledit corps vert.

10. Procédé selon la revendication 9, dans lequel ladite étape de chauffage comprend l'une des étapes suivantes :
(a) elle consiste à sécher ledit corps vert à une température dans l'intervalle de 40 à 400°C pendant une période d'environ 1 à 4 h ;
(b) elle consiste à sécher ledit corps vert à une température dans l'intervalle de 60 à 150°C pendant une période d'environ 1 à 4 h ;
(c) après ladite étape de séchage, le corps vert est calciné dans une atmosphère non réactive à une température d'environ 400 à 800°C pendant au moins 10 min;
(d) après ladite étape de séchage, le corps vert est calciné dans une atmosphère non réactive à une température d'environ 425 à 650°C pendant au moins 10 min
(e) ladite étape de chauffage comprend en outre les étapes consistant à sécher ledit corps vert à une température d'environ 90 à environ 120°C pendant une période d'environ 2 à environ 4 h et à calciner ensuite ledit corps vert séché dans une atmosphère inerte ou non réactive à une température d'environ 425 à environ 650°C pendant environ 30 à 45 min;
(f) ladite étape de calcination comprend en outre l'élévation de la température jusqu'à environ 250°C à une vitesse ne dépassant pas environ 2°C/min et l'élévation suivante de la température de 250°C jusqu'à la température de calcination à une vitesse ne dépassant pas environ 3°C/min.

11. Composite aggloméré alumine/charbon actif calciné utilisable en tant qu'agent de sorption à une température proche de la température ambiante, le composite aggloméré présentant du charbon actif uniformément dispersé à l'intérieur de celui-ci et ayant une résistance à l'écrasement d'au moins 4,5 kg (10 livres) pour un produit d'extrusion de diamètre 3 mm (1/8 pouce), le composite résultant d'un mélange de poudre de charbon actif présentant une taille de particules dans l'intervalle d'environ 0,5 à 500 »m, de (a) poudre d'hydrate d'alumine de structure boéhmite ou de (b) poudre d'hydrate d'alumine présentant une taille de particules dans l'intervalle de 0,02 à 200 »m, d'un agent peptisant et d'eau, le mélange comprenant en pour-cent en poids du mélange total, de 5 à 90 % d'hydrate d'alumine, de 5 à 90 % de charbon actif, de 2 à 30 % d'agent peptisant et de l'eau, la quantité dudit agent peptisant étant suffisante pour communiquer audit composite ladite résistance à l'écrasement; ledit mélange étant formé en un corps vert et chauffé pendant une durée suffisante pour augmenter sa résistance et former ledit composite aggloméré calciné alumine/charbon actif.

12. Composite selon la revendication 11, dans lequel ledit charbon présente une des propriétés suivantes
(a) ledit charbon actif présente un volume de pores d'au moins 0,1 cc/g;
(b) ledit charbon actif présente un volume de pores allant jusqu'à 5,0 cc/g ;
(c) ledit charbon actif présente un volume de pores allant jusqu'à 2,5 cc/g.

13. Composite selon la revendication 11 ou 12, dans lequel ladite alumine présente une des propriétés suivantes :
(a) ladite poudre d'alumine présente une taille de particules dans l'intervalle de 0,1 à 200 »m ;
(b) ladite poudre d'alumine présente une taille de particules dans l'intervalle de 0,02 à 100 »m ;
(c) ladite poudre d'alumine présente une taille de particules dans l'intervalle de 0,02 à 75 »m ;
(d) ladite poudre d'alumine présente une taille de particules dans l'intervalle de 0,02 à 50 »m;
(e) ladite poudre d'alumine présente une taille de particules dans l'intervalle de 0,02 à 10 »m;
(f) ladite poudre d'alumine présente une taille de particules dans l'intervalle de 0,1 à 100 »m;
(g) ladite poudre d'alumine présente une taille de particules dans l'intervalle de 0,1 à 50 »m ; et
(h) ladite poudre d'alumine présente une taille de particules dans l'intervalle de 0,1 à 10 »m.

14. Composite selon la revendication 11, 12 ou 13, dans lequel ledit composite contient de l'alumine dans l'un des intervalles suivants :
(a) de 5 à 50 % en poids dudit composite ; et
(b) de 5 à 20 % en poids dudit composite.

15. Composite selon l'une quelconque des revendications 11 à 14, dans lequel le charbon actif est contenu dans l'intervalle de 40 à 85 % en poids.

16. Composite aggloméré calciné alumine/charbon actif selon la revendication 11, ledit mélange comprenant de la poudre de charbon actif présentant une taille de particules dans l'intervalle de 0,5 à 300 »m et (a) de l'alumine de structure boéhmite peptisée présentant une taille de particules inférieure à 50 »m ou (b) de l'alumine peptisée présentant une taille moyenne de particules dans l'intervalle de 0,02 à 50 »m.
